(19) Europäisches Patentamt
European Patent Office
Office européen des brevets

(11) **EP 1 995 883 A1**

(12) **DEMANDE DE BREVET EUROPEEN**

(43) Date de publication:
**26.11.2008 Bulletin 2008/48**

(51) Int Cl.:
**H04B 1/69** (2006.01)  **H04L 25/49** (2006.01)
**H04L 1/06** (2006.01)

(21) Numéro de dépôt: **08156301.7**

(22) Date de dépôt: **15.05.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **21.05.2007 FR 0755164**

(71) Demandeur: **Commissariat à l'Energie Atomique 75015 Paris (FR)**

(72) Inventeur: **Abou Rjeily, Chadi ZAHLE (LB)**

(74) Mandataire: **Augarde, Eric Brevalex 56 Boulevard de l'Embouchure, Bât. B B.P. 27519 31075 Toulouse Cedex 2 (FR)**

(54) **Système de communication MIMO UWB de type incohérent**

(57) La présente invention concerne un procédé de codage spatio-temporel pour un système MIMO-UWB impulsionnel utilisant des symboles appartenant à un alphabet de modulation PPM. L'orthogonalité des signaux émis par les différentes antennes est assurée en prévoyant un mécanisme de permutation des positions de modulation des symboles PPM et en imposant une contrainte sur les positions desdits symboles. Le procédé de codage spatio-temporel selon l'invention permet une réception de type incohérent.

Fig. 2

**Description**

**DOMAINE TECHNIQUE**

La présente invention concerne à la fois le domaine des télécommunications en ultra-large bande ou UWB (*Ultra Wide Band)* et celui des systèmes de télécommunication multi antennes, dits aussi MIMO *(Multiple Input Multiple Output)*.

**ÉTAT DE LA TECHNIQUE ANTÉRIEURE**

Les systèmes de télécommunication UWB ont fait l'objet de recherches considérables ces dernières années. Ces systèmes ont pour spécificité de travailler directement en bande de base sur des signaux dits ultra-large bande. On entend généralement par signal UWB un signal conforme au masque spectral stipulé dans la réglementation du FCC du 14 Février 2002, révisée en Mars 2005, c'est-à-dire, pour l'essentiel, un signal dans la bande spectrale 3.1 à 10.6 GHz présentant une largeur de bande d'au moins 500MHz à -10dB.

Les signaux UWB se divisent en deux catégories : les signaux multi-bande OFDM (MB-OFDM) et les signaux UWB de type impulsionnel. Un signal UWB impulsionnel est constitué d'impulsions très courtes, de l'ordre de quelques centaines de picosecondes à une nanoseconde. Par la suite, la description sera limitée aux systèmes UWB impulsionnels.

Par ailleurs, les systèmes de type multi-antenne sont bien connus de l'état de la technique. Ces systèmes utilisent une pluralité d'antennes à l'émission et/ou à la réception et sont dénommés, selon le type de configuration adoptée, MIMO *(Multiple Input Multiple* Output), MISO *(Multiple Input Single Output)* ou SIMO *(Single Input Multiple Output)*. Par la suite nous emploierons le même terme MIMO pour couvrir les variantes MIMO et MISO précitées. L'exploitation de la diversité spatiale à l'émission et/ou à la réception permet à ces systèmes d'offrir des capacités de canal nettement supérieures à celles des systèmes mono-antenne classiques (ou SISO pour Single Input Single Output). Cette diversité spatiale est généralement complétée par une diversité temporelle au moyen d'un codage spatio-temporel (STC). Dans un tel codage, un symbole d'information à transmettre se trouve codé sur plusieurs antennes et plusieurs instants de transmission.

On peut distinguer :

- les systèmes à réception cohérente, dans lesquels le récepteur connaît les caractéristiques du canal de transmission, typiquement grâce à une estimation de canal faite à partir de symboles pilotes transmis par le terminal émetteur. L'estimation de canal est ensuite utilisée pour la détection des symboles d'information. Les systèmes cohérents sont généralement destinés à des applications à haut débit ;
- les systèmes à réception incohérente, dans lesquels le récepteur effectue une détection à l'aveugle des symboles d'information, sans connaissance préalable des caractéristiques du canal de transmission.

Des systèmes MIMO à codage spatio-temporel utilisant des signaux de transmission UWB impulsionnels ont été proposés dans la littérature tant pour une réception cohérente que pour une réception incohérente. En particulier, l'article de L. Yang et al. intitulé « Analog space-time coding for multi-antenna ultra-wideband transmissions » publié dans IEEE Trans. on Comm., Vol. 52, No. 3, Mars 2004, pages 507-517 décrit un système MIMO UWB à réception incohérente utilisant une modulation PPM (Pulse Position Modulation) pour coder les symboles de transmission sur chacune des antennes. Dans le système préconisé, pour un terminal utilisateur donné possédant P antennes, le signal émis par une antenne $p \in \{1,..,P\}$ pour transmettre un symbole s appartenant à un alphabet de modulation PPM, peut s'écrire pendant un temps symbole $T_s$ :

$$s_p(t) = \sum_{n=0}^{N_f-1} a_{pn} w\left(t - nT_f - c_n T_c - s\varepsilon\right) \qquad (1)$$

où w(t) est la forme de l'impulsion élémentaire, $T_s = NT_f$ est le temps symbole, constituée de N trames de durée $T_f$, $\{c_0, c_1,..,c_{Nf-1}\}$ est une séquence d'accès propre à l'utilisateur donnant les sauts temporels $c_n T_c$ où $T_c$ est la durée de la bribe (chip) élémentaire, s est une position PPM appartenant à $\{0,..,M-1\}$, $\varepsilon \ll T_c$ est l'écart temporel séparant deux positions PPM consécutives, $\{a_{p,0}, a_{p,1},...,a_{p,Nf-1}\}$, $p=1,..,P$ sont des séquences de modulation, par exemple de modulation BPSK, permettant de rendre orthogonaux les signaux émis par les différentes antennes. Le signal donné par l'expression (1) est dit de type TH-UWB (*Time Hopped UWB*) car la séparation des différents utilisateurs est assurée par des séquences orthogonales de sauts temporels.

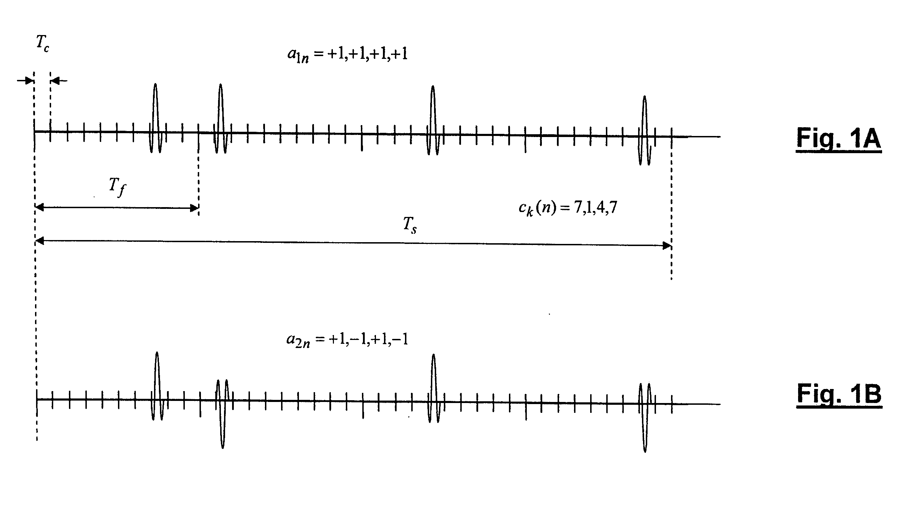

Les Figs. 1A et 1B illustrent les signaux de transmission émis par deux antennes d'un terminal utilisateur, pour un même symbole PPM. La séquence de l'utilisateur est ici $c_n$=7,1,4,7 et la position PPM $s$=0. On remarque que les séquences de pondération BPSK respectives de ces deux antennes, exprimées sous forme vectorielle $a_1$=(+1,+1,+1,+1) et $a_2$=(+1,-1,+1,-1), sont bien orthogonales entre elles à l'émission, c'est-à-dire $\mathbf{a}_1\mathbf{a}_2^{\mathrm{T}} = 0$ .

Le système précédemment décrit permet d'atteindre une diversité maximale sans nécessiter une estimation de canal. Il se prête donc théoriquement bien à une réception incohérente.

Toutefois l'utilisation de séquences de modulation BPSK pour séparer les signaux des différentes antennes d'un même terminal utilisateur nécessite de pouvoir récupérer l'information de polarité au niveau du récepteur. Or, étant donné la très courte durée des impulsions utilisées, il est extrêmement difficile de récupérer une information de phase dans un signal UWB.

De surcroît, la modulation BPSK utilisée à l'émission conduit à inverser la polarité de certaines impulsions, comme on peut le voir sur les Figs. 1A et 1B. Cela revient en fait à utiliser non pas un alphabet de modulation PPM classique mais un alphabet composite dont chaque symbole est défini à la fois par une position d'impulsion et un signe, d'où une plus grande complexité du modulateur.

L'objectif de la présente invention est par conséquent de proposer un système MIMO-UWB à codage spatio-temporel, simple et robuste, à réception incohérente, permettant une séparation des différents signaux d'antennes sans nécessiter de récupérer l'information de phase à la réception.

**EXPOSÉ DE L'INVENTION**

La présente invention est définie par un procédé de codage spatio-temporel pour un système de télécommunication UWB impulsionnel possédant une pluralité $P$ d'éléments radiatifs. Ce procédé associe à toute combinaison $s_1$, $s_2$,...,$s_P$ de $P$ symboles appartenant à un alphabet de modulation PPM à $M$ positions de modulation avec $M>P$+1, le code spatio-temporel défini par la matrice:

$$\mathbf{C} = \begin{pmatrix} \mathbf{s}_1 & \mathbf{s}_2 & \cdots & \mathbf{s}_P \\ \Omega\mathbf{s}_P & \mathbf{s}_1 & \cdots & \mathbf{s}_{P-1} \\ \vdots & \vdots & \ddots & \vdots \\ \Omega\mathbf{s}_2 & \cdots & \Omega\mathbf{s}_P & \mathbf{s}_1 \end{pmatrix}$$

à une permutation près de ses lignes et/ou de ses colonnes, les symboles de chaque colonne de ladite matrice étant destinés à être émis par un élément radiatif donné et les symboles de chaque ligne de ladite matrice étant destinés à être émis pendant une utilisation de canal donnée, où $\Omega$ est une permutation des positions de modulation et les symboles $\mathbf{s}_1,\mathbf{s}_2,...,\mathbf{s}_P$ obéissent à la contrainte :

$$\mathbf{s}_i \neq \mathbf{s}_j$$

pour $i,j$=1,..,$P$ avec $i \neq j$

$$\Omega\mathbf{s}_i \neq \mathbf{s}_j$$

pour $i$=2,..,$P$ et $j$=1,...,$i$-1.

Les positions de modulation respectives $s_1,s_2,...,s_P$ des symboles $\mathbf{s}_1,\mathbf{s}_2,...,\mathbf{s}_P$ vérifient avantageusement la contrainte $0<s_1<s_2<...<s_P<M$, et $\Omega$ est alors une permutation circulaire des positions de modulation transformant chaque position de modulation $s \in \{0,..,M\text{-}1\}$ en la position $\omega(s)=s+1[M]$.

Chaque élément de la matrice de code spatio-temporel peut être utilisé pour moduler les positions respectives des impulsions d'un signal TH-UWB.

L'invention concerne également un terminal d'émission possédant une pluralité $P$ d'éléments radiatifs destinés à émettre des signaux UWB de type impulsionnel. Ce terminal comprend un transcodeur pour coder une première pluralité $\ell$ de symboles d'information $\sigma_1,\sigma_2,...,\sigma_\ell$ en une seconde pluralité $P$ de symboles $\mathbf{s_1,s_2,...,s_P}$ appartenant à un alphabet de modulation PPM, un codeur spatio-temporel générant à partir de ces derniers, le code spatio-temporel défini par la matrice :

$$\mathbf{C} = \begin{pmatrix} \mathbf{s_1} & \mathbf{s_2} & \cdots & \mathbf{s_P} \\ \mathbf{\Omega s_P} & \mathbf{s_1} & \cdots & \mathbf{s_{P-1}} \\ \vdots & \vdots & \ddots & \vdots \\ \mathbf{\Omega s_2} & \cdots & \mathbf{\Omega s_P} & \mathbf{s_1} \end{pmatrix}$$

à une permutation près de ses lignes et/ou de ses colonnes, les symboles de chaque colonne ($p$) de ladite matrice étant destinés à être émis par un élément radiatif donné et les symboles de chaque ligne de ladite matrice étant destinés à être émis pendant une utilisation de canal donnée, où $\Omega$ est une permutation des positions de modulation et les symboles $\mathbf{s_1,s_2,...,s_P}$ obéissent à la contrainte :

$$\mathbf{s_i} \neq \mathbf{s_j}$$

pour $i,j=1,..,P$ avec $i \neq j$

$$\mathbf{\Omega s_i} \neq \mathbf{s_j}$$

pour $i=2,..,P$ et $j=1,...,i\text{-}1$.

Les positions de modulation respectives $s_1,s_2,...,s_P$ des symboles $\mathbf{s_1,s_2,...,s_P}$ fournis par le transcodeur vérifient avantageusement la contrainte $0<s_1<s_2<...<s_p<M,$ et $\Omega$ est alors une permutation circulaire des positions de modulation transformant chaque position de modulation $s \in \{0,..,M\text{-}1\}$ en la position $\omega(s)=s+1[M]$.

Le terminal peut comprendre une pluralité de modulateurs de signaux TH-UWB, chaque modulateur modulant un signal TH-UWB par les éléments successifs d'une colonne de ladite matrice. Par exemple, chaque modulateur module en position chaque impulsion du dit signal TH-UWB.

Lesdits éléments radiatifs peuvent être des antennes UWB, des diodes électroluminescentes ou des diodes laser.

Enfin l'invention concerne également un terminal de réception comprenant une ou plusieurs ($Q$) antennes de réception, dans lequel le signal reçu par chaque antenne est filtré par une batterie de filtres adaptés à une pluralité $\mathbf{\mathit{KP}}$ de signaux TH-UWB définis à un coefficient multiplicatif près par :

$$s_p^{v-1}(t) = \frac{1}{\sqrt{N_f}} \sum_{n=0}^{N_f-1} \sum_{m=0}^{M-1} w(t-nT_f - \delta(m-c_p^{v-1})\varepsilon)$$

pour une pluralité $P$ d'utilisations $v=0,..,P$-1 du canal, où $c_p^{v-1} \in \{0,..,M-1\}$ est définie comme la position de modulation du symbole PPM en $v$-ième ligne et $p$-ième de la matrice

$$C = \begin{pmatrix} s_1 & s_2 & \cdots & s_P \\ \Omega s_P & s_1 & \cdots & s_{P-1} \\ \vdots & \vdots & \ddots & \vdots \\ \Omega s_2 & \cdots & \Omega s_P & s_1 \end{pmatrix}$$

avec la contrainte $0<s_1<s_2<...<s_P<M$ où $s_1,s_2,..,s_P$ sont les positions respectives des symboles $\mathbf{s_1,s_2,...,s_P}$ ;

les énergies des signaux issus desdits filtres adaptés sont intégrées dans des intégrateurs pour lesdites $P$ utilisations du canal et chaque combinaison de symboles $\mathbf{s_1,s_2,...,s_P}$ vérifiant ladite contrainte;

pour chacune desdites combinaisons, les énergies ainsi intégrées pour les différentes antennes sont sommées dans des sommateurs;

les énergies intégrées et sommées pour chacune desdites combinaisons sont comparées dans un comparateur (450) qui sélectionne celle fournissant la valeur maximale.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

les Figs. 1A et 1B montrent les signaux transmis pas deux antennes d'un système MIMO-UWB connu de l'état de la technique ;

la Fig. 2 montre un exemple de code spatio-temporel selon l'invention ;

la Fig. 3 illustre un émetteur d'un système MIMO utilisant un codage spatio-temporel selon un mode de réalisation de l'invention ;

la Fig. 4 illustre un récepteur d'un système MIMO adapté à décoder un code spatio-temporel selon un mode de réalisation de l'invention ;

la Fig. 5 montre le taux d'erreur symbole en fonction du rapport signal à bruit pour un système mono-antenne et un système multi-antenne utilisant le codage spatio-temporel selon l'invention.

## EXPOSÉ DÉTAILLÉ DE MODES DE RÉALISATION PARTICULIERS

L'idée à la base de l'invention est d'utiliser dans un système MIMO-UWB de type impulsionnel un code spatio-temporel dont les éléments appartiennent à un sous-ensemble d'un alphabet de modulation PPM et d'assurer l'orthogonalité entre les signaux émis grâce à un mécanisme de permutation des positions de modulation.

Nous considérons à nouveau un système MIMO UWB impulsionnel et plus particulièrement un terminal utilisateur à $P$ antennes d'émission.

Dans la suite, nous représenterons de manière conventionnelle un code spatio-temporel sous la forme matricielle :

$$C = \begin{pmatrix} \mathbf{c}_1^0 & \mathbf{c}_2^0 & \cdots & \mathbf{c}_P^0 \\ \mathbf{c}_1^1 & \mathbf{c}_2^1 & \cdots & \mathbf{c}_P^1 \\ \vdots & \vdots & \ddots & \vdots \\ \mathbf{c}_1^{P-1} & \mathbf{c}_2^{P-1} & \cdots & \mathbf{c}_P^{P-1} \end{pmatrix} \qquad (2)$$

où les éléments $\mathbf{c}_p^n$, $p = 1,..,P$, $n = 0,..,P$-1 sont les symboles de transmission modulant les signaux des différentes antennes. Plus précisément, chaque colonne de la matrice correspond à une antenne et chaque ligne de celle-ci correspond à un instant d'utilisation du canal (Per Channel Use ou PCU). Ainsi le symbole $\mathbf{c}_p^n$ sera émis par l'antenne $p$ pendant le ($n$+1) ième PCU.

Selon un mode général de réalisation, le code spatio-temporel proposé est défini par la matrice :

$$C = \begin{pmatrix} \mathbf{s}_1 & \mathbf{s}_2 & \cdots & \mathbf{s}_P \\ \mathbf{\Omega s}_P & \mathbf{s}_1 & \cdots & \mathbf{s}_{P-1} \\ \vdots & \vdots & \ddots & \vdots \\ \mathbf{\Omega s}_2 & \cdots & \mathbf{\Omega s}_P & \mathbf{s}_1 \end{pmatrix} \qquad (3)$$

où les éléments $s_1,s_2,...,s_P$ sont des symboles d'un alphabet de modulation PPM, de cardinal $M$, obéissant à une contrainte donnée plus loin et $\Omega$ est une permutation des positions de modulation. On appelle permutation des positions de modulation toute bijection de l'ensemble des positions de modulation sur lui-même, autre que l'identité.

La contrainte précitée pesant sur les symboles $s_1,s_2,...,s_P$ s'exprime de la manière suivante :

$$\mathbf{s_i} \neq \mathbf{s_j} \quad \text{pour} \quad i,j = 1,..,P \quad \text{avec} \quad i \neq j$$

$$\mathbf{\Omega s_i} \neq \mathbf{s_j} \quad \text{pour} \quad i = 2,..,P \quad \text{et} \quad j = 1,...,i-1 \qquad (4)$$

Il est essentiel de comprendre que, si les symboles $\mathbf{s_1,s_2,...,s_P}$ obéissent à la contrainte (4), alors les symboles de chaque ligne de la matrice **C** définie en (3), sont distincts. Autrement dit, à chaque utilisation du canal, les positions de modulation respectives des symboles transmis par les différentes antennes sont distinctes, ce qui se traduit par l'orthogonalité des signaux émis et une diversité maximale du code spatio-temporel.

On notera que cette propriété est conservée si l'on permute les lignes et/ou les colonnes de la matrice **C**. En effet, la permutation de deux lignes revient à permuter deux instants de transmission et la permutation de deux colonnes revient à permuter deux antennes. Ces deux opérations conservent bien entendu la propriété d'orthogonalité des signaux émis.

Dans la suite, on se référera indifféremment à un symbole PPM soit en donnant sa position de modulation $s_{P} \in$ {0,..,$M$-1} soit au moyen de sa représentation vectorielle $\mathbf{s_p} = \left( s_p^0, s_p^1,..,s_p^{M-1} \right)^T$ où $s_p^m = \delta\left( m - s_p \right)$ et $\delta(.)$ est la distribution de Dirac. On comprendra que ce dernier vecteur a toutes ses composantes nulles sauf une égale à 1, indiquant la position de modulation du symbole en question.

Selon un mode avantageux de réalisation la permutation $\Omega$ est une permutation circulaire.

En adoptant cette représentation vectorielle, $\Omega$ peut s'écrire sous la forme d'une matrice de taille $M \times M$ :

$$\boldsymbol{\Omega} = \begin{pmatrix} \mathbf{0}_{1\times M-1} & \mathbf{1} \\ \mathbf{I}_{M-1\times M-1} & \mathbf{0}_{M-1\times 1} \end{pmatrix} = \begin{pmatrix} 0 & 0 & \cdots & 0 & 1 \\ 1 & 0 & \cdots & 0 & 0 \\ 0 & 1 & 0 & \ddots & \vdots \\ & & \cdots & \ddots & 0 \\ 0 & 0 & \cdots & 1 & 0 \end{pmatrix} \qquad (5)$$

où $I_{M-1\times M-1}$ est la matrice identité de taille $M$-$1\times M$-1, $0_{1\times M-1}$ est le vecteur ligne nul de taille $M$-1, $0_{M-1\times 1}$ est le vecteur colonne nul de taille $M$-1.

La matrice **C** du code spatio-temporel peut également s'écrire, en développant les symboles PPM, comme une matrice de taille $PM\times M$, constituée uniquement de « 0 » et de « 1 » :

$$C = \begin{bmatrix} s_1^0 & s_2^0 & \cdots & s_P^0 \\ s_1^1 & s_2^1 & \cdots & s_P^1 \\ \vdots & \vdots & \cdots & \vdots \\ s_1^{M-1} & s_2^{M-1} & \cdots & s_P^{M-1} \\ s_P^{M-1} & s_1^0 & \ddots & \vdots \\ s_P^0 & s_1^1 & \ddots & \vdots \\ \vdots & \vdots & \ddots & \vdots \\ s_P^{M-2} & s_1^{M-1} & \ddots & \vdots \\ \vdots & \vdots & \ddots & s_2^0 \\ \vdots & \vdots & \ddots & s_2^1 \\ \vdots & \vdots & \ddots & \vdots \\ \vdots & \vdots & \ddots & s_2^{M-1} \\ s_2^{M-1} & \cdots & s_P^{M-1} & s_1^0 \\ s_2^0 & \cdots & s_P^0 & s_1^1 \\ \vdots & \cdots & \vdots & \vdots \\ s_2^{M-2} & \cdots & s_P^{M-2} & s_1^{M-1} \end{bmatrix} \qquad (6)$$

Selon ce mode avantageux de réalisation de l'invention, la contrainte (4) est réalisée en imposant la condition suivante:

$$0 < s_1 < s_2 < ... < s_P < M \qquad (7)$$

Dans ce cas, les positions de modulation respectives des différents symboles forment une suite ordonnée croissante, la première position de modulation étant interdite. On notera que la condition (7) suppose que l'on puisse choisir $P$ valeurs distinctes appartenant à l'ensemble {1,2,..,$M$-1}. Par conséquent, on doit avoir :

$$P < M - 1 \qquad\qquad (8)$$

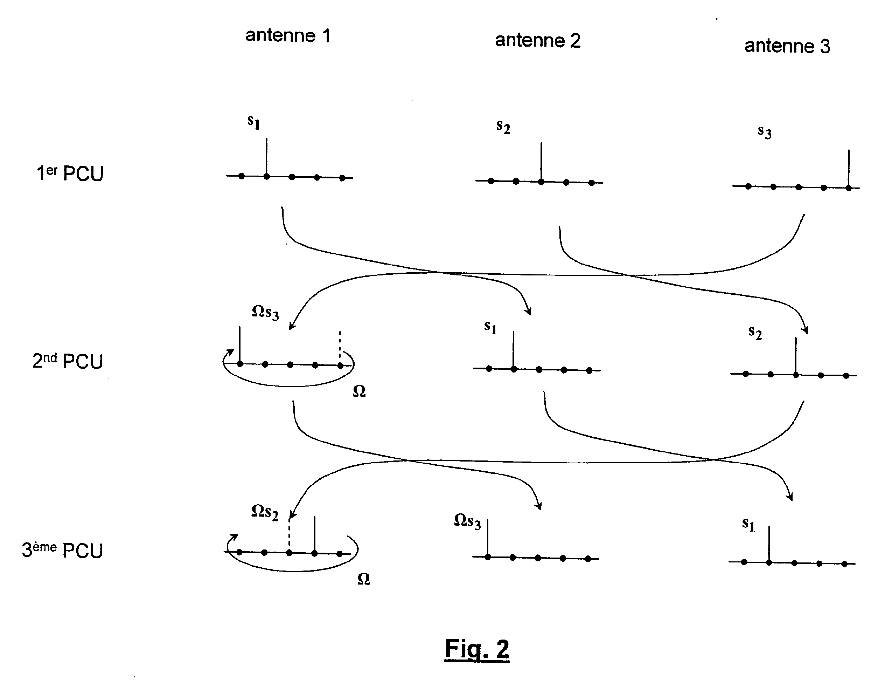

La Fig. 2 illustre un exemple de code spatio-temporel selon un exemple de réalisation de l'invention avec $P$=3 et $M$ = 5. On a fait figurer, pour chacun des symboles PPM, la position de modulation par un trait vertical, ce pour les trois antennes et les trois utilisations consécutives du canal.

On voit que le fait de réserver la première position de modulation permet de ne pas avoir de collision entre les positions de modulation de $\Omega s_P$ et $s_1$ lors de la seconde utilisation du canal. De même, le fait que les positions $s_1, s_2,..., s_p$ soient ordonnées comme indiqué en (7) assure que les positions de modulation des symboles PPM pour une utilisation du canal quelconque restent distinctes et que, comme on l'a affirmé plus haut, les signaux émis par les différentes antennes sont bien orthogonaux.

En outre, on notera que le nombre de symboles PPM vérifiant la condition (7) est égal au nombre $K$ de combinaisons de $P$ éléments parmi $M$-1, soit $K = \begin{pmatrix} P \\ M-1 \end{pmatrix}$.

Le nombre de symboles transmis par utilisation du canal peut donc s'exprimer en tant que moyenne sur les $P$ utilisations successives:

$$R = \frac{K}{P} = \frac{M-1}{P} \cdot \frac{M-2}{P} \cdot \frac{M-3}{P-1} .... \frac{M-P}{2} \qquad\qquad (9)$$

expression supérieure à 1 comme produit de termes supérieurs à 1. Ce nombre augmente avec l'écart entre $M$ et $P$, ce qui est logique dans la mesure où l'on dispose alors de plus de latitude dans le choix des symboles PPM.

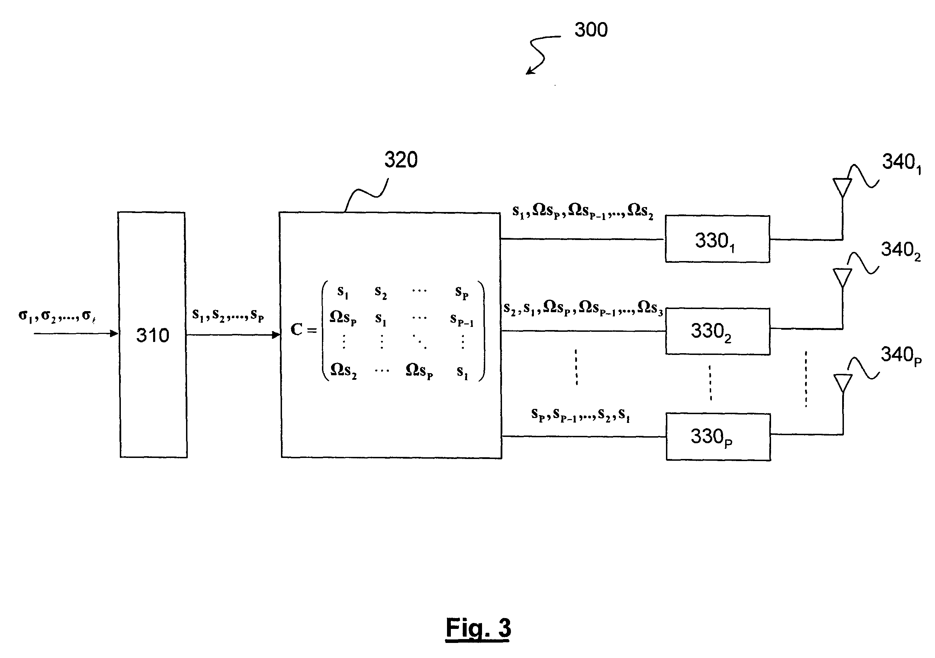

La Fig. 3 illustre schématiquement un émetteur d'un système MIMO-UWB utilisant un code spatio-temporel selon un mode de réalisation de l'invention.

L'émetteur 300 reçoit des trames de symboles d'information notés $\sigma_1, \sigma_2,...,\sigma_\ell$ où $\ell \le \log_2(K)$ si ces symboles sont binaires et plus généralement $\ell \le \log_2(K)/\log_2(\mu)$ s'ils sont $\mu$-aires. Les symboles d'information font l'objet d'un transcodage dans le module 310 pour fournir les symboles de transmission PPM $s_1, s_2,..., s_P$. La fonction de transcodage peut être quelconque à condition qu'elle soit biunivoque.

Les symboles PPM $s_1, s_2,..., s_P$ font l'objet d'un codage spatio-temporel dans le module 320 Celui-ci transmet respectivement aux modulateurs UWB $330_1, 330_2,..,330_P$ les séquences de symboles PPM correspondant respectivement aux $P$ lignes de la matrice **C**, à savoir la séquence $s_1, \Omega s_P, \Omega s_{P-1},.., \Omega s_2$ au modulateur $330_1$, $s_2, s_1, \Omega s_P, \Omega s_{P-1},..., \Omega s_3$ au modulateur $330_2$,...,la séquence $s_P, s_{P-1},..,s_2, s_1$ au modulateur 330p .

Selon une variante de réalisation, les modulateurs $330_1,..,330_P$ sont de type TH-UWB. Dans ce cas, par exemple, le signal généré par $330_1$ a la forme, en prenant les mêmes conventions de notation que dans (1) :

- pour la première utilisation du canal (PCU) :

$$s_1(t) = \sum_{n=0}^{N_f - 1} w\left(t - nT_f - c_n T_c - s_1 \varepsilon\right) \qquad\qquad (10)$$

- pour la seconde utilisation du canal :

$$s_1(t) = \sum_{n=0}^{N_f-1} w\big(t - nT_f - c_n T_c - \omega(s_P)\varepsilon\big) \qquad (11)$$

avec $\omega(s_P) = s_P + 1[M]$ où [.] désigne l'opération modulo.

et ainsi de suite jusqu'à la $P$ ième utilisation du canal :

$$s_1(t) = \sum_{n=0}^{N_f-1} w\big(t - nT_f - c_n T_c - \omega(s_2)\varepsilon\big) \qquad (12)$$

Les signaux issus des autres modulateurs s'obtiennent *mutatis mutandis* à partir des autres colonnes de la matrice **C**. Les signaux des différents modulateurs sont ensuite transmis par des éléments radiatifs $340_1,...,340_P$, par exemple des antennes UWB, des diodes électroluminescentes, ou des diodes laser.

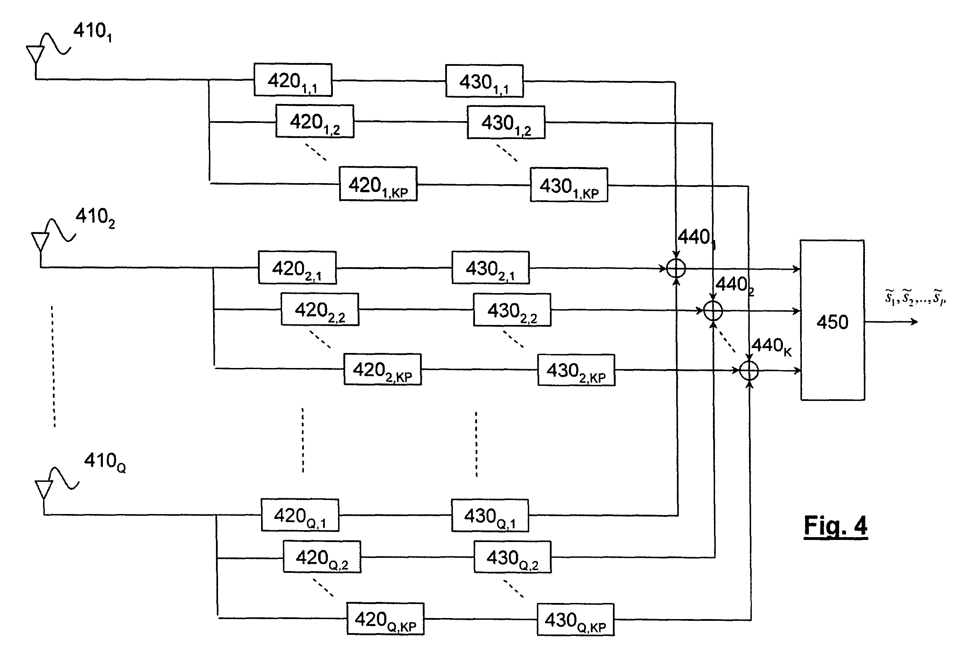

Les signaux ainsi transmis peuvent être décodés par un dispositif de décodage spatio-temporel selon un mode de réalisation de l'invention, tel qu'illustré en Fig. 4. Le dispositif comprend une pluralité $Q$ d'antennes de réception ou de photodétecteurs selon la nature des signaux émis.

Le signal reçu par l'antenne 410q, correspondant à la v-ième utilisation du canal, peut s'écrire sous la forme :

$$r_q(t) = \sum_{p=1}^{P} \sum_{n=0}^{N_f-1} \sum_{m=0}^{M} h_{pq} \otimes w(t - nT_f - \delta(m - c_p^{v-1})\varepsilon) + n_q(t) \qquad (13)$$

où $\otimes$ est le signe de convolution, $c_p^{v-1}$ la position PPM du symbole $\mathbf{c_p^{v-1}}$ de la matrice **C,** telle que définie en (2) et (3), où $h_{pq}$ est la réponse impulsionnelle du canal entre l'antenne d'émission $p$ et l'antenne de réception $q$, et où $n_q(t)$ est le bruit de réception au niveau de l'antenne 410q.

Le signal reçu par chaque antenne 410q, $q=1,..,Q$ est filtré par une batterie de **KP** filtres adaptés $420_{q,1}$ à $420_{q,KP}$ aux signaux respectifs :

$$s_p^{v-1}(t) = \frac{1}{\sqrt{N_f}} \sum_{n=0}^{N_f-1} \sum_{m=0}^{M-1} w(t - nT_f - \delta(m - c_p^{v-1})\varepsilon) \qquad (14)$$

pendant chacune des v utilisations du canal, où l'on rappelle que $c_p^{v-1}$ est la position PPM du symbole en v-ième ligne et $p$-ième de la matrice **C**, telle que définie en (3), avec la contrainte (7), c'est-à-dire $0 < c_1^0 < c_2^0 < ... < c_P^0 < M$ **.**

Les **KP** filtres adaptés correspondent aux signaux émis respectivement par les **P** antennes pour les **K** combinaisons possibles de $\boldsymbol{s_1, s_2, .., s_P}$ vérifiant cette contrainte.

Les sorties des filtres adaptés sont ensuite détectées par des détecteurs quadratiques $430_{k,q}$ $k=1,..,K$ et $q=1,..,Q$. Chaque détecteur quadratique intègre l'énergie du signal reçu pendant les $P$ utilisations successives du canal.

Les signaux détectés relatifs à une même combinaison sont sommés dans les sommateurs $440_k$, $k=1,..,K$. Enfin le comparateur 450 sélectionne la valeur sommée la plus élevée.

On peut montrer que la valeur sommée, correspondant aux symboles effectivement émis $\tilde{s}_1, \tilde{s}_2, .., \tilde{s}_p$ est égale à :

$$E\left(\widetilde{s}_1,\widetilde{s}_2,..,\widetilde{s}_P\right) = P\sum_{p=1}^{P}\sum_{q=1}^{Q}\left|h_{pq}\right|^2 \tag{15}$$

où $h_{pq}$ est le coefficient de transmission du canal entre l'antenne d'émission $p$ et l'antenne de réception $q$. Le facteur $P$ dans (16) est dû au fait que l'intégration est effectuée sur les $P$ utilisations du canal.

En revanche, pour la valeur sommée relative à une combinaison quelconque de symboles $s_1,s_2,..,s_P$, on peut montrer que la valeur sommée a la forme générale :

$$E\left(s_1,s_2,..,s_P\right) = \sum_{p=1}^{P}\alpha_p\sum_{q=1}^{Q}\left|h_{pq}\right|^2 \quad \text{où} \quad \alpha_p \in \{1,..,P\} \tag{16}$$

l'égalité $\alpha_1=\alpha_2=...=\alpha_P=P$ n'étant vérifiée que pour $(s_1,s_2,..,s_P)=(\widetilde{s}_1,\widetilde{s}_2,..,\widetilde{s}_P)$. Par conséquent, $E(\widetilde{s}_1,\widetilde{s}_2,..,\widetilde{s}_P)$ correspond bien au maximum de la valeur sommée (16).

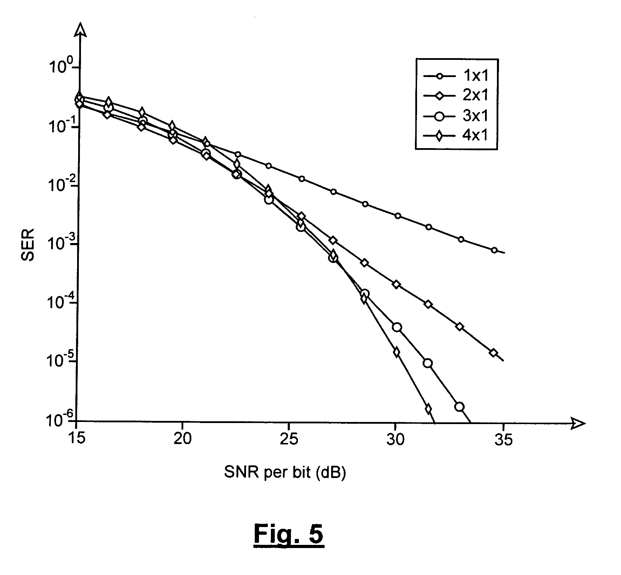

La Fig. 5 compare le taux d'erreur par symbole en fonction du rapport signal à bruit, pour un système mono-antenne ($1\times1$) et pour des systèmes MIMO-UWB utilisant un codage spatio-temporel selon l'invention. Les configurations d'antennes utilisées dans le système MIMO sont $2\times1$, $3\times1$ et $4\times1$. On voit que pour de faibles rapports signal à bruit, le système mono-antenne est légèrement meilleur que les systèmes MIMO. Cela est dû au fait que les débits des codes spatio-temporels selon l'invention ont des débits plus faibles que pour un codage PPM simple dans un système mono-antenne. On rappelle que le débit d'un code spatio-temporel (3) est de $\dfrac{\log_2\binom{P}{M-1}}{P}$ par PCU alors que pour un codage PPM simple, le débit est de $\log_2(M)$ par PCU. On notera que la détérioration observée à faible rapport signal sur bruit est d'autant moins sensible que le degré de modulation $M$ est élevé.

En revanche, pour des valeurs plus importantes de rapport signal à bruit, le codage spatio-temporel selon l'invention est sensiblement meilleur que dans le cas mono-antenne classique, comme on peut le voir sur la Fig. 5.

**Revendications**

1. Procédé de codage spatio-temporel pour système de télécommunication UWB impulsionnel possédant une pluralité $P$ d'éléments radiatifs, **caractérisé en ce qu'**il associe à toute combinaison $\mathbf{s_1,s_2,...,s_P}$ de $P$ symboles appartenant à un alphabet de modulation PPM à $M$ positions de modulation avec $M>P+1$, le code spatio-temporel défini par la matrice :

$$\mathbf{C} = \begin{pmatrix} \mathbf{s_1} & \mathbf{s_2} & \cdots & \mathbf{s_P} \\ \mathbf{\Omega s_P} & \mathbf{s_1} & \cdots & \mathbf{s_{P-1}} \\ \vdots & \vdots & \ddots & \vdots \\ \mathbf{\Omega s_2} & \cdots & \mathbf{\Omega s_P} & \mathbf{s_1} \end{pmatrix}$$

à une permutation près de ses lignes et/ou de ses colonnes, les symboles de chaque colonne de ladite matrice étant destinés à être émis par un élément radiatif donné et les symboles de chaque ligne de ladite matrice étant destinés à être émis pendant une utilisation de canal donnée, où $\Omega$ est une permutation des positions de modulation et les symboles $\mathbf{s_1,s_2,...,s_P}$ obéissent à la contrainte :

$$\mathbf{s_i} \neq \mathbf{s_j}$$

pour $i,j$=1,..,$P$ avec $i{\neq}j$

$$\boldsymbol{\Omega}\mathbf{s_i} \neq \mathbf{s_j}$$

pour $i$=2,..,$P$ et $j$=1,...,$i$-1.

2. Procédé de codage spatio-temporel selon la revendication 1, **caractérisé en ce que** les positions de modulation respectives $s_1,s_2,...,s_P$ des symboles $\mathbf{s_1,s_2,...,s_P}$ vérifient la contrainte $0<s_1<s_2<...<s_P<M$, et que $\Omega$ est une permutation circulaire des positions de modulation transformant chaque position de modulation $s{\in}\{0,..,M$-1$\}$ en la position $\omega(s)$=$s$+1$[M]$.

3. Procédé de codage spatio-temporel selon la revendication 1 ou 2, **caractérisé en ce que** chaque élément de la matrice de code spatio-temporel module les positions respectives des impulsions d'un signal TH-UWB.

4. Terminal d'émission (300) possédant une pluralité P d'éléments radiatifs destinés à émettre des signaux UWB de type impulsionnel, **caractérisé en ce qu'** il comprend un transcodeur (310) pour coder une première pluralité $\ell$ de symboles d'information $\sigma_1,\sigma_2,...,\sigma_\ell$ en une seconde pluralité $P$ de symboles $\mathbf{s_1,s_2,...,s_P}$ appartenant à un alphabet de modulation PPM, un codeur spatio-temporel (320) générant à partir de ces derniers, le code spatio-temporel défini par la matrice :

$$\mathbf{C} = \begin{pmatrix} \mathbf{s_1} & \mathbf{s_2} & \cdots & \mathbf{s_P} \\ \boldsymbol{\Omega}\mathbf{s_P} & \mathbf{s_1} & \cdots & \mathbf{s_{P-1}} \\ \vdots & \vdots & \ddots & \vdots \\ \boldsymbol{\Omega}\mathbf{s_2} & \cdots & \boldsymbol{\Omega}\mathbf{s_P} & \mathbf{s_1} \end{pmatrix}$$

à une permutation près de ses lignes et/ou de ses colonnes, les symboles de chaque colonne ($p$) de ladite matrice étant destinés à être émis par un élément radiatif donné (340p) et les symboles de chaque ligne de ladite matrice étant destinés à être émis pendant une utilisation de canal donnée, où $\Omega$ est une permutation des positions de modulation et les symboles $\mathbf{s_1,s_2,...,s_P}$ obéissent à la contrainte :

$$\mathbf{s_i} \neq \mathbf{s_j}$$

pour $i,j$=1,..,$P$ avec $i{\neq}j$

$$\Omega s_i \neq s_j$$

pour $i=2,..,P$ et $j=1,...,i-1$.

5. Terminal d'émission selon la revendication 4, **caractérisé en ce que** les positions de modulation respectives $s_1$, $s_2$,....$s_P$ des symboles $\mathbf{s_1,s_2,...,s_P}$ fournis par le transcodeur vérifient la contrainte $0<s_1<s_2<...<s_P<M$, et que $\Omega$ est une permutation circulaire des positions de modulation transformant chaque position de modulation $s \in \{0,..,M-1\}$ en la position $\omega(s)=s+1[M]$.

6. Terminal d'émission selon la revendication 4 ou 5, **caractérisé en qu'**il comprend une pluralité de modulateurs de signaux TH-UWB ($330_1$ , $330_2$,..., $330_P$), chaque modulateur modulant un signal TH-UWB par les éléments successifs d'une colonne de ladite matrice.

7. Terminal d'émission selon la revendication 6, **caractérisé en ce que** ledit modulateur module en position chaque impulsion du dit signal TH-UWB.

8. Terminal d'émission selon l'une des revendications 4 à 7, **caractérisé en ce que** lesdits éléments radiatifs sont des antennes UWB.

9. Terminal d'émission selon l'une des revendications 4 à 7, **caractérisé en ce que** lesdits éléments radiatifs sont des diodes électroluminescentes ou des diodes laser.

10. Terminal de réception comprenant une ou plusieurs ($Q$) antennes de réception **caractérisé en ce que** le signal reçu par chaque antenne (410q) est filtré par une batterie de filtres ($420_{q,1},...420_{q,KP}$) adaptés à une pluralité $KP$ de signaux TH-UWB définis à un coefficient multiplicatif près par :

$$s_p^{v-1}(t) = \frac{1}{\sqrt{N_f}} \sum_{n=0}^{N_f-1} \sum_{m=0}^{M-1} w(t - nT_f - \delta(m - c_p^{v-1})\varepsilon)$$

pour une pluralité $P$ d'utilisations $v=0,..,P-1$ du canal, où $c_p^{v-1} \in \{0,..,M-1\}$ est définie comme la position de modulation du symbole PPM en $v$-ième ligne et $p$-ième de la matrice

$$C = \begin{pmatrix} s_1 & s_2 & \cdots & s_P \\ \Omega s_P & s_1 & \cdots & s_{P-1} \\ \vdots & \vdots & \ddots & \vdots \\ \Omega s_2 & \cdots & \Omega s_P & s_1 \end{pmatrix}$$

avec la contrainte $0<s_1<s_2<...<s_P<M$ où $s_1,s_2,..,s_P$ sont les positions respectives des symboles $\mathbf{s_1,s_2,...,s_P}$ ;

les énergies des signaux issus desdits filtres adaptés sont intégrées dans des intégrateurs ($430_{1,1},..,430_{1,PK}$) pour lesdites $P$ utilisations du canal et chaque combinaison de symboles $\mathbf{s_1,s_2,...,s_P}$ vérifiant ladite contrainte; pour chacune desdites combinaisons, les énergies ainsi intégrées pour les différentes antennes sont sommées dans des sommateurs ($440_1,..,440_K$) ;

les énergies intégrées et sommées pour chacune desdites combinaisons sont comparées dans un comparateur (450) qui sélectionne celle fournissant la valeur maximale.

$T_c$

$a_{1n} = +1,+1,+1,+1$

$T_f$

$c_k(n) = 7,1,4,7$

$T_s$

**<u>Fig. 1A</u>**

$a_{2n} = +1,-1,+1,-1$

**<u>Fig. 1B</u>**

EP 1 995 883 A1

antenne 1                antenne 2                antenne 3

1er PCU          $s_1$              $s_2$              $s_3$

2nd PCU          $\Omega s_3$       $s_1$              $s_2$

                 $\Omega$

3ème PCU         $\Omega s_2$       $\Omega s_3$       $s_1$

                 $\Omega$

**Fig. 2**

EP 1 995 883 A1

300

320

$$C = \begin{pmatrix} s_1 & s_2 & \cdots & s_P \\ \Omega s_P & s_1 & \cdots & s_{P-1} \\ \vdots & \vdots & \ddots & \vdots \\ \Omega s_2 & \cdots & \Omega s_P & s_1 \end{pmatrix}$$

$\sigma_1, \sigma_2, \ldots, \sigma_t$

310

$s_1, s_2, \ldots, s_P$

$s_1, \Omega s_P, \Omega s_{P-1}, \ldots, \Omega s_2$

$330_1$

$340_1$

$s_2, s_1, \Omega s_P, \Omega s_{P-1}, \ldots, \Omega s_3$

$330_2$

$340_2$

$s_P, s_{P-1}, \ldots, s_2, s_1$

$330_P$

$340_P$

**Fig. 3**

**Fig. 4**

EP 1 995 883 A1

**Fig. 5**

**Office européen**
**des brevets**

**RAPPORT DE RECHERCHE EUROPEENNE**

Numéro de la demande

EP 08 15 6301

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ABOU-RJEILY C ET AL: "A rate-1 2 * 2 space-time code without any constellation extension for TH-UWB communication systems with PPM" VEHICULAR TECHNOLOGY CONFERENCE, 2007. VTC2007-SPRING. IEEE 65TH, IEEE, PI, 22 avril 2007 (2007-04-22), pages 1683-1687, XP002470796 ISBN: 1-4244-0266-2 | 1-9 | INV. H04B1/69 H04L25/49 H04L1/06 |
| Y | * page 1683, colonne de droite, alinéa 2 * * page 1684, colonne de gauche, alinéas 1,2 * * page 1685, colonne de gauche, alinéa 1 - colonne de droite, alinéa 3 * | 10 | |
| A | CHADI ABOU-RJEILY ET AL: "Space-Time Coding for Multiuser Ultra-Wideband Communications" IEEE TRANSACTIONS ON COMMUNICATIONS, IEEE SERVICE CENTER, PISCATAWAY, NJ, US, vol. 54, no. 11, novembre 2006 (2006-11), pages 1960-1972, XP011150343 ISSN: 0090-6778 | 1-9 | |
| Y | * page 1961, colonne de gauche, alinéa 2 * * page 1962, colonne de droite, alinéa 4 * | 10 | DOMAINES TECHNIQUES RECHERCHES (IPC) H04B H04L |
| X | CHADI ABOU-RJEILY ET AL: "A 2 X 2 Antennas Ultra-Wideband System with Biorthogonal Pulse Position Modulation" IEEE COMMUNICATIONS LETTERS, IEEE SERVICE CENTER, PISCATAWAY, NJ, US, vol. 10, no. 5, 5 mai 2006 (2006-05-05), pages 366-368, XP002450772 ISSN: 1089-7798 | 1-9 | |
| A | * page 367, colonne de gauche, alinéa 1-3 * | 10 | |

-/--

Le présent rapport a été établi pour toutes les revendications

| Lieu de la recherche | Date d'achèvement de la recherche | Examinateur |
|---|---|---|
| Munich | 29 septembre 2008 | Agudo Cortada, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen
des brevets**

**RAPPORT DE RECHERCHE EUROPEENNE**

Numéro de la demande

EP 08 15 6301

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CHADI ABOU-RJEILY ET AL: "Amplify-and-Forward Cooperative Diversity with Space-Time Coded UWB Systems" ULTRA-WIDEBAND, THE 2006 IEEE 2006 INTERNATIONAL CONFERENCE ON, IEEE, PI, septembre 2006 (2006-09), pages 429-434, XP031007174 ISBN: 1-4244-0101-1 * page 432, section III.B * ----- | 1-10 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 29 septembre 2008 | Agudo Cortada, E |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

    ....................................................................................................
& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **L. YANG et al.** Analog space-time coding for multi-antenna ultra-wideband transmissions. *IEEE Trans. on Comm.,* Mars 2004, vol. 52 (3), 507-517